# EUROPEAN PATENT SPECIFICATION

(11) **EP 3 560 560 B1**
(45) Date of publication and mention of the grant of the patent: **26.06.2024**
(21) Application number: 17901317.2
(22) Date of filing: 02.05.2017
(51) Int. Cl.: A63B 60/08, A63B 59/40, A63B 102/16, A63B 60/18

(54) **TABLE TENNIS RACKET COMPONENT**
TISCHTENNISSCHLÄGERKOMPONENTE
COMPOSANT DE RAQUETTE DE TENNIS DE TABLE

(30) Priority: 13.03.2017 JP 2017047866
(43) Date of publication of application: 30.10.2019
(73) Proprietor: Tamasu Co., Ltd., Tokyo 166-0004 (JP)
(72) Inventor: IWASE, Yusuke, Tokorozawa-shi Saitama 359-0005 (JP); KANAI, Kazuma, Tokorozawa-shi Saitama 359-0005 (JP); NIWA, Akihiko, Tokorozawa-shi Saitama 359-0005 (JP); ICHII, Masatsugu, Daito-shi Osaka 574-0042 (JP)
(74) Representative: Ter Meer Steinmeister & Partner
(86) International application number: PCT/JP2017/017282
(87) International publication number: WO 2018/167989

(56) References cited:
- EP-A1- 2 060 590
- DE-A1- 2 123 728
- GB-A- 2 275 014
- JP-A- H1 157 090
- JP-A- 2000 342 732
- JP-Y2- H0 214 240
- US-A- 3 972 528
- US-A1- 2016 136 492

## Description

### Technical Field

The present invention relates to a component of a table tennis racket such as a gripping member.

### Background Art

A table tennis racket has a blade (a table tennis racket body), and a gripping member fixed to the blade and making up a handle gripped by a user during use (for example, Patent Literature 1), and the gripping member fixed to the blade is conventionally composed of wood.

The blade has a flat plate shape and is composed of a single board or a laminate with multiple boards laminated. A table tennis rubber is laminated to the blade to form a ball hitting surface.

### Citation List

### Patent Literature

Patent Literature 1: JP2010-227371

Moreover JP 2000 342732 A discloses a table tennis racket component comprising a resin foam forming at least a part of a surface of the table tennis racket component and a porous material contained in the resin foam.

### Summary of Invention

### Technical Problem

An object of the present invention is to provide a novel technique that may reduce a change in frictions before and after sweating during use of a table tennis racket.

### Solution to Problem

As described above, the gripping member is fixed to the blade and makes up the handle of the racket gripped by a user.

A preference of a feeling obtained when gripping the handle varies depending on a user (player), however in general, in order to maintain a play quality more, it is preferable to reduce the change in the feelings obtained from the handle as much as possible at the time of start of the play and during the play after a certain time has elapsed. On the other hand, the feelings obtained from the handle change as the play time passes. One of the causes of such a change in the feelings obtained from the handle is, for example, a change in the friction state on the surface of the handle due to sweating by a player or the like.

As a result of an intensive study, the present inventor has found that when a resin foam is used to form the gripping member, etc. and the resin foam contains a porous material, a change in friction between the resin foam and the skin can be smaller before and after sweating, and thus completed the present invention which is defined in the appended claims.

The subject matter of the present invention is as follows.
[1] A table tennis racket component to be attached to a blade of the table tennis racket, comprising:
   a resin foam forming at least a part of a surface of the table tennis racket component; and
   a porous material contained in the resin foam, wherein a ratio of the porous material to 100 parts by mass of a resin component making up the resin foam is 10 parts by mass or more.
[2] The table tennis racket component according to [1], wherein the resin foam contains one or more selected from the group consisting of wood powder, zeolite powder and eggshell powder as the porous material.
[3] The table tennis racket component according to [1] or [2], wherein the resin foam contains wood powder as the porous material.
[4] The table tennis racket component according to any one of [1] to [3], wherein a ratio of the porous material to 100 parts by mass of a resin component making up the resin foam is 20 parts by mass or more.
[5] The table tennis racket component according to any one of [1] to [4], wherein the table tennis racket component is a gripping member.
[6] A table tennis racket comprising the table tennis racket component according to any one of [1] to [5].

### Advantageous Effect of Invention

According to the present invention, it is possible to provide a novel technique that may reduce the change in frictions before and after sweating during use of a table tennis racket.

### Brief Description of Drawing

[Figure 1] Figure 1 is a perspective view of a table tennis racket comprising a gripping member of the present embodiment.
[Figure 2] Figure 2 is a graphical representation depicting the difference in the coefficients of dynamic friction of the dry (untreated) state and the state in which a sweat liquid was applied, when each gripping member of the Examples is subjected to a dynamic friction test.

### Description of Embodiments

Hereinafter, one embodiment of the present invention will be described in detail by taking a gripping member as the table tennis racket component according to the present invention as an example.

The table tennis racket component herein refers to a member that the table tennis racket component may be one of constituents of the racket when the table tennis racket is used. Accordingly, even if the member is, for example, not attached to a blade, it may be formed as a table tennis racket. "The table tennis racket component is attached to the blade" is a concept including the case in which the table tennis racket component is attached directly to the blade and also the case in which it is attached to the blade via another member.

"A member making up a handle for a user in the blade" refers to a member that is integrated with other parts in the blade, for example, a part making up a ball hitting surface, etc., to form the blade, and makes up the handle for a user along with a gripping member, etc., attached to the blade.

The present embodiment relates to a gripping member of a table tennis racket comprising a resin foam containing a porous material thereon.

Hereinafter, as a table tennis racket comprising a gripping member of the present embodiment, a shake hand type table tennis racket for double sided hitting (hereafter, simply referred to as a table tennis racket) will be described as an example. However, the gripping member of the present embodiment is not limited to that applied to the shake hand type, and may be, for example, a gripping member of a pen holder type.

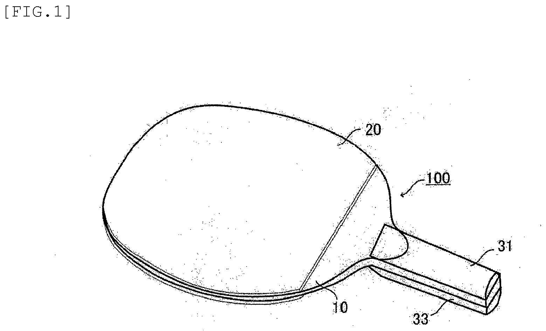

Figure 1 is a perspective view of a table tennis racket 100 according to the present embodiment.

The table tennis racket 100 of the present embodiment comprises the blade (the racket body) 10 on both sides of which the table tennis rubber 20 is laminated to form a ball hitting surface, and the gripping member 31, 33 fixed to the blade 10 and making up the handle held by a user during use of the racket.

The blade 10 has a flat plate shape and may be manufactured, for example, by laminating several wooden boards and sticking them together. Materials and the like are not particularly limited, and those manufactured according to the usual method may be used.

The gripping member is composed of two members, the gripping member 31 disposed on the fore side and the gripping member 33 disposed on the back side, which are fixed so as to sandwich the blade 10. The shape and thickness of these gripping members 31, 33 may also be changed appropriately, are not particularly limited.

In the present embodiment, a table tennis racket with a straight type handle is shown as a shake hand type table tennis racket, however it is not limited thereto, and may be a flair type, an anatomic type, a conic type or the like.

Next, the gripping member of the present embodiment will be described.

As described above, the gripping member of the present embodiment comprises a resin foam containing a porous material.

The resin foam is a molded article obtained by foaming a resin that may be used for manufacturing foams, and a resin component is not particularly limited as long as foams may be manufactured.

The resin component may include, for example, vinyl acetate-based resins such as ethylene-vinyl acetate copolymers (EVA); vinyl chloride resins (PVC); styrene-based resins such as polystyrenes, styrene butadiene resins, acrylonitrile styrene resins (AS resin), and acrylonitrile butadiene styrene resins (ABS resin); olefin-based resins such as low density polyethylenes, high density polyethylenes, and polypropylenes; α-olefin-based resins such as ethylene-α-olefin copolymers and ethylene-butene copolymers; ester-based resins such as polyethylene terephthalates and polybutylene terephthalates; amide-based resins such as 6-nylons; vinyl chloride-based resins; acrylic-based resins such as poly methyl methacrylates; styrene-based elastomers such as styrene ethylene butylene styrene block copolymers (SEBS); ethylene-vinyl acetate copolymer-based elastomers; olefin-based elastomers; styrene butadiene styrene copolymers (SBS); urethane-based elastomers; ester-based elastomers; fluorine-based elastomers; silicone-based elastomers; polyamide-based elastomers; synthetic rubbers such as butadiene rubbers (BR), isoprene rubbers (IR), chloroprenes (CR); natural rubbers (NR); copolymer rubbers such as styrene butadiene rubbers (SBR), acrylonitrile butadiene rubbers (NBR) and butyl rubbers (IIR). The foam according to the present embodiment may be formed, for example, from one or more polymers among them. When the foam according to the present embodiment is formed from two or more polymers, the mixing ratio is not particularly limited, and may be set appropriately by a person skilled in the art.

The resin foam according to the present embodiment contains a porous material. The porous material herein means a substance having a large number of pores thereon.

The type of the porous material is not limited and may be set appropriately by a person skilled in the art. The porous material may include wood powder, zeolite powder, eggshell powder, cellulose powder, alumina, ceramic, silicon, nylon, maifan stone, and for example, one or more among them may be contained in the resin foam.

Among them, from the view point of being able to reduce the change in frictions before and after sweating, preferably, one or more selected from the group consisting of wood powder, zeolite powder and eggshell powder as the porous material are contained, more preferably, wood powder is contained.

In the present embodiment, as the porous material, commercially available products may be used, and for example, those prepared using a grinder such as a ball mill may be used.

The size and the like of the porous material is not particularly limited as long as the substance has pores on the surface and may be set appropriately by a person skilled in the art. On the other hand, from the view point of being able to reduce the change in frictions before and after sweating, for example, the porous material with a volume average particle diameter (D50) of 30 to 500 µm is preferably contained in the resin foam.

The size of the porous material may be measured using a laser diffraction particle diameter distribution measuring device. An example of measuring devices and measuring conditions are shown below.
Measuring device: Laser diffraction particle diameter distribution measuring device SALD-3100
Measuring conditions: Refractive index 1.70 - 0.00i
   Number of measurements 2
   Measurement interval 2 sec
   Average number of times 64
   Measured absorbance 0.010-0.200

In addition, the resin foam according to the present embodiment may also contain other components in addition to the resin and the porous material, and may include, for example, a blowing agent, a blowing auxiliary, a pigment (a color batch), a cross-linking agent, an adhesive and the like.

The blowing agent may include a physical blowing agent such as an inorganic blowing agent such as sodium carbonate, sodium bicarbonate, ammonium carbonate, ammonium bicarbonate, ammonium nitrite, an azide compound, sodium borohydride, metal powder; an organic blowing agent such as azodicarbonamide (ADCA), azobisformamide, azobisisobutyronitrile, barium azodicarboxylate, N,N'-dinitrosopentamethylenetetramine (DNPT), N,N'-dinitroso-N,N'-dimethylterephthalamide, benzenesulfonyl hydrazide, p-toluenesulfonyl hydrazide, p,p'-oxybisbenzenesulfonyl hydrazide (OBSH), p-toluenesulfonyl semicarbazide; a hydrocarbon such as pentane, butane, hexane; a halogenated hydrocarbon such as methyl chloride, methylene chloride; gas such as nitrogen, air; a fluorinated hydrocarbon such as trichlorofluoromethane, dichlorodifluoromethane, trichlorotrifluoroethane, chlorodifluoroethane, hydrofluorocarbon; and the like. The blowing agent may be used alone or in combination of two or more.

The blowing auxiliary may include, for example, urea and a urea derivative, a zinc (metal) compound such as zinc white, zinc stearate, zinc carbonate, or an oxide such as salicylic acid.

According to the invention, the porous material contained in the resin foam is at a ratio of 10 parts by mass or more to 100 parts by mass of the resin component making up the resin foam, more preferably 20 parts by mass or more, even more preferably 25 parts by mass or more. By the ratio of porous material being 10 parts by mass or more, it is possible to reduce the change in frictions before and after sweating as compared to the case of less than 10 parts by mass.

In addition, the upper limit of the ratio of the porous material is not particularly limited, but may be 50 parts by mass or less to 100 parts by mass of the resin component making up the resin foam, from the viewpoint of a productivity. Furthermore, from the view point of reducing the change in frictions before and after sweating, 38 parts by mass or less is preferable, and 33 parts by mass or less is more preferable.

Accordingly, the ratio of the porous material is preferably 10 parts by mass or more and 50 parts by mass or less, more preferably 10 parts by mass or more and 38 parts by mass or less, even more preferably 10 parts by mass or more and 33 parts by mass or less, most preferably 20 parts by mass or more and 33 parts by mass or less, even most preferably 25 parts by mass or more and 33 parts by mass or less, to 100 parts by mass of the resin component making up the resin foam.

The gripping member of the present embodiment may be manufactured using above-mentioned resin foam. Hereinafter, an example of the manufacturing method will be described.

First, a resin, a porous material, and other materials such as a blowing agent and a blowing auxiliary that are added as needed, are kneaded.

The resulting mixture is then subjected to a foam molding process. A method of the foam molding process is not particularly limited, and known methods are available, and may be any of chemical methods, physical methods and the like. For example, an extrusion foaming method, a press foaming method or an injection foaming method may be mentioned. Expansion ratio and the like are not particularly limited, and may be set appropriately.

The obtained foam molded article is processed such as by cutting to have a desired shape, to form the gripping member of the present embodiment. The resulting gripping member is fixed to the blade using, for example, an adhesive.

In the present embodiment, the ratio of the resin foam on the gripping member surface is not particularly limited. Accordingly, besides the aspect in which the entire gripping member is formed of the resin foam, the aspect may be such that a part of the surface of the gripping member is composed of the resin foam. For example, it may be an aspect in which the gripping member is made up by a combination of the resin foam according to the present embodiment and another material such as wood, and the resin foam is disposed at the position on the surface of the gripping member that a user's skin touches.

According to the gripping member of the present embodiment, it is possible to reduce the change in frictions before and after sweating between the resin foam and the skin.

In addition, since the resin foam is used in the present embodiment, warping of the gripping member and peeling from the blade may be suppressed as compared to the conventional case in which the wood is used.

Furthermore, since the resin foam is used in the present embodiment, it is easy to be formed into the intended shape as compared to wood and the like, and for example, various color may also be provided by an addition of a pigment and the like, and so it is preferable from the view point of design improvement.

As mentioned above, although an embodiment of the present invention has been described by taking the gripping member as an example, the present invention is not limited to the gripping member but may use another member or the like as long as it is a member to be attached to the blade of the table tennis racket. Specifically, although it depends on the user's habit of grip and the like, a member which user's skin may touch during use of the table tennis racket may be mentioned. For example, a sheet stuck to the surface which is not the ball hitting surface of a pen holder type table tennis racket (a back sheet), a tape wrapped around the gripping member, a part touched by a user's hand among parts making up a handle for a user in the blade, or the like may be mentioned. These members, like the gripping member, may also reduce the change in frictions before and after sweating between the skin and the member. Consequently, it may contribute to reducing the change of feelings from the skin, and can contribute to maintaining a user's play quality.

### Examples

The present invention will be more specifically described by the following Examples, but the present invention is not limited thereto.

### (Manufacturing of a gripping member)

The materials whose content ratios are described in table 1, 2 were kneaded using a kneader. The resulting kneaded mixture was charged into the mold (200 x 300 x 9 [mm]), foam molded in a steam press at about 160°C, and then further processed to have a straight type shape to obtain the gripping members of Comparative Example 1 and Examples 1-12. The volume average particle diameter (D50) of the wood powder used in Examples 1 and 2 was 68 µm. The sieved particle size of the zeolite powder according to Examples 3 and 4 was 200 µm or less and the sieved particle size of the eggshell powder according to Examples 5 and 6 was 300 µm or less. In addition, the volume average particle diameter (D50) of the wood powder used in Examples 9 and 10 was 119 µm and the volume average particle diameter (D50) of the wood powder used in Examples 11 and 12 was 362 µm.

**[Table 1]**

| | Comparative Example 1 | Example 1 | Example 2 | Example 3 | Example 4 | Example 5 | Example 6 |
|---|---|---|---|---|---|---|---|
| Material | No addition | Wood powder Formulation (68µm) | | Zeolite powder Formulation | | Eggshell powder Formulation | |
| Polyethylene | 50 | 50 | 50 | 50 | 50 | 50 | 50 |
| EVA | 30 | 30 | 30 | 30 | 30 | 30 | 30 |
| SBR | 20 | 20 | 20 | 20 | 20 | 20 | 20 |
| Wood powder | - | 15 | 30 | - | - | - | - |
| Zeolite powder | - | - | - | 15 | 30 | - | - |
| Eggshell powder | - | - | - | - | - | 15 | 30 |
| Blowing agent | 6 | 6 | 6 | 6 | 6 | 6 | 6 |
| Color batch | 5 | 5 | 5 | 5 | 5 | 5 | 5 |
| Cross-linking agent and adhesive | 33 | 33 | 33 | 33 | 33 | 33 | 33 |
| (Parts by mass) | | | | | | | |

**[Table 2]**

| | Example 7 | Example 8 | Example 9 | Example 10 | Example 11 | Example 12 |
|---|---|---|---|---|---|---|
| Material | Wood powder Formulation (68µm) | | Wood powder Formulation (119µm) | | Wood powder Formulation (362µm) | |
| Polyethylene | 50 | 50 | 50 | 50 | 50 | 50 |
| EVA | 30 | 30 | 30 | 30 | 30 | 30 |
| SBR | 20 | 20 | 20 | 20 | 20 | 20 |
| Wood powder | 35 | 40 | 15 | 30 | 15 | 30 |
| Zeolite powder | - | - | - | - | - | - |
| Eggshell powder | - | - | - | - | - | - |
| Blowing agent | 6 | 6 | 6 | 6 | 6 | 6 |
| Color batch | 5 | 5 | 5 | 5 | 5 | 5 |
| Cross-linking agent and adhesive | 33 | 33 | 33 | 33 | 33 | 33 |
| (Parts by mass) | | | | | | |

### (Coefficient of dynamic friction test)

For the gripping members of Examples and Comparative Examples, dynamic friction tests in a dry (untreated) state and a state in which a sweat liquid was applied was carried out, and the change in the coefficients of dynamic friction was evaluated. Specifically, samples sliced to a thickness of 1 mm from the gripping members of Examples and Comparative Examples were prepared, and the samples in the dry (untreated) state or the state in which 0.1 mL of a sweat liquid was applied was provided for the measurement using a coefficient of dynamic friction measuring instrument.

In addition to the gripping member of Comparative Example 1 obtained as described above, gripping members molded from a laminated material formed by laminating thin wood boards with an adhesive, and from single woods of cedar (Sennen cedar) and cypress were used in Comparative Examples 2-4.
Measuring conditions are shown below.
Measuring device: Coefficient of dynamic friction measuring instrument TriboGear
Measuring conditions: Load 400 g
   Contactor Resin hemispherical shape
   Number of measurements 10
   Feeding speed 600 mm/sec
   Feeding length 60 mm

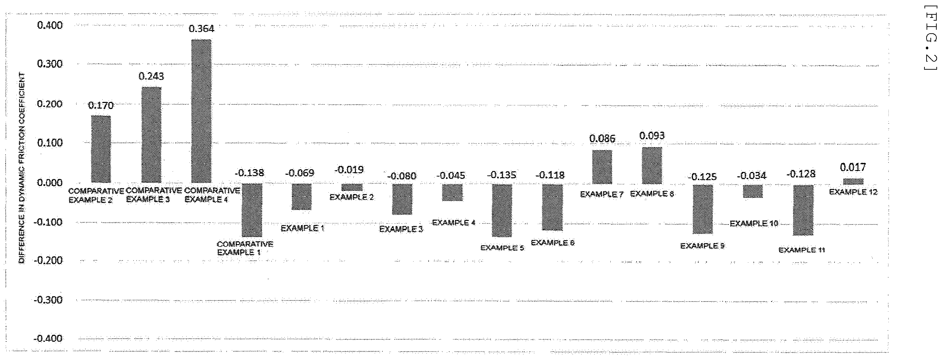

The results are shown in Figure 2.

From the results, it may be understood, that the gripping members of the Examples have a small difference in the coefficients of dynamic friction between the dry (untreated) state and the state in which the sweat liquid was applied as compared to the gripping members of Comparative Examples.

## Claims

1. A table tennis racket component to be attached to a blade (10) of the table tennis racket (100), comprising:
a resin foam forming at least a part of a surface of the table tennis racket component; and
a porous material contained in the resin foam,
**characterized in that**
a ratio of the porous material to 100 parts by mass of a resin component making up the resin foam is 10 parts by mass or more.

2. The table tennis racket component according to claim 1, wherein the resin foam contains one or more selected from the group consisting of wood powder, zeolite powder and eggshell powder as the porous material.

3. The table tennis racket component according to claim 1 or 2, wherein the resin foam contains wood powder as the porous material.

4. The table tennis racket component according to any one of claims 1 to 3, wherein a ratio of the porous material to 100 parts by mass of a resin component making up the resin foam is 20 parts by mass or more.

5. The table tennis racket component according to any one of claims 1 to 4, wherein the table tennis racket component is a gripping member (31, 33).

6. A table tennis racket (100) comprising the table tennis racket component according to any one of claims 1 to 5.

## Patentansprüche

1. Tischtennisschlägerkomponente, die an einem Schlägerblatt (10) des Tischtennisschlägers (100) befestigt werden soll, umfassend:
einen Harzschaum, der mindestens einen Teil einer Oberfläche der Tischtennisschlägerkomponente bildet, und
ein poröses Material, das in dem Harzschaum enthalten ist,
**dadurch gekennzeichnet, dass** ein Verhältnis des porösen Materials zu 100 Massenteilen einer Harzkomponente, die den Harzschaum bildet, 10 Massenteile oder mehr beträgt.

2. Tischtennisschlägerkomponente nach Anspruch 1, wobei der Harzschaum eines oder mehrere, ausgewählt aus der Gruppe bestehend aus Holzpulver, Zeolithpulver und Eierschalenpulver, als poröses Material enthält.

3. Tischtennisschlägerkomponente nach Anspruch 1 oder 2, wobei der Harzschaum Holzpulver als poröses Material enthält.

4. Tischtennisschlägerkomponente nach einem der Ansprüche 1 bis 3, wobei das Verhältnis des porösen Materials zu 100 Massenteilen einer Harzkomponente, die den Harzschaum bildet, 20 Massenteile oder mehr beträgt.

5. Tischtennisschlägerkomponente nach einem der Ansprüche 1 bis 4, wobei die Tischtennisschlägerkomponente ein Griffelement (31, 33) ist.

6. Tischtennisschläger (100), umfassend die Tischtennisschlägerkomponente nach einem der Ansprüche 1 bis 5.

## Revendications

1. Composant de raquette de tennis de table à fixer sur une palette (10) de la raquette de tennis de table (100), comportant :
une mousse de résine formant au moins une partie d'une surface du composant de raquette de tennis de table ; et
un matériau poreux contenu dans la mousse de résine,
**caractérisé en ce qu'**un rapport du matériau poreux sur 100 parties en masse d'un composant de résine constituant la mousse de résine est de 10 parties en masse ou plus.

2. Composant de raquette de tennis de table selon la revendication 1, dans lequel la mousse de résine contient un ou plusieurs éléments choisis parmi le groupe constitué de poudre de bois, de poudre de zéolithe et de poudre de coquille d'oeuf en tant que matériau poreux.

3. Composant de raquette de tennis de table selon la revendication 1 ou 2, dans lequel la mousse de résine contient de la poudre de bois en tant que matériau poreux.

4. Composant de raquette de tennis de table selon l'une quelconque des revendications 1 à 3, **caractérisé en ce qu'**un rapport du matériau poreux sur 100 parties en masse d'un composant de résine constituant la mousse de résine est de 20 parties en masse ou plus.

5. Composant de raquette de tennis de table selon l'une quelconque des revendications 1 à 4, dans lequel le composant de raquette de tennis de table est un élément de préhension (31, 33).

6. Raquette de tennis de table (100) comportant le composant de raquette de tennis de table selon l'une quelconque des revendications 1 à 5.
